# EUROPEAN PATENT SPECIFICATION

(11) **EP 2 199 124 B1**
(45) Date of publication and mention of the grant of the patent: **27.06.2012**
(21) Application number: 08425794.8
(22) Date of filing: 16.12.2008
(51) Int. Cl.: B60G 21/05

(54) **Curved twist-beam axle**
Gebogene Verbundlenkerachse
Essieu rigide hélicoïdal recourbé

(43) Date of publication of application: 23.06.2010
(73) Proprietor: Fiat Group Automobiles S.p.A., 10135 Torino (TO) (IT)
(72) Inventor: Cavallero, Marco, 10135 Torino (IT); Battaglia, Gaetano, 10135 Torino (IT)
(74) Representative: Di Gennaro, Sergio

(56) References cited:
- EP-A- 0 681 932
- EP-A- 0 752 332
- EP-A- 1 454 776
- DE-C1- 19 653 959
- DE-U1- 29 809 241
- US-A1- 2008 150 349

## Description

The present invention relates to the field of suspensions and similar structures for road and/or off-road vehicles and, in detail, regards a curved twist-beam axle. Such an axle according to the preamble of claim 1 is known from US 2008/0150349 A.

It is known that vehicles can be provided with suspension systems constituted by axles with twist cross beam, commonly referred to as "twist-beam axles". They typically have two elements for fixing to the hubs of the wheels of one of the axles of the motor vehicle - which are technically known as "hub mounts" - and a twist beam (or cross member) for joining them, which is hence set orthogonal with respect to the axis of advance of the vehicle.

It is moreover known that in front-wheel-drive vehicles, said twist beam is substantially of a rectilinear type, whilst its cross section can vary according to the desired characteristics of stiffness, from a thin open section to a closed section, obtained with tubular elements.

In four-wheel-drive vehicles, instead, recourse is had to an independent-wheel architecture, which makes it possible to obtain the space necessary for housing the transmission shaft and the differential.

Recently, the idea has been proposed of using a simple rear suspension with interconnected wheels, where the twist beam is, however, arched upwards so as to enable passage of the transmission shaft.

From the document EP 0 733 501 B1 it is known that there exist twist beams with curved cross section and provided with reinforcement elements. The beam illustrated in the above document is U-shaped with open cross section and with variable curvature in order to maximize the flexural strength of the beam when subjected to a lateral load.

The solution proposed by the aforementioned document presents the drawback of requiring structural reinforcements, such as triangular reinforcements bent in such a way that they also are U-shaped. Said triangular reinforcements must necessarily be welded to the convex part of the twist beam and in the proximity of the lateral areas in which the lateral arms are welded in order to increase the stiffness and the fatigue strength of the structure.

The presence of reinforcements and of an open box structure is limiting from the standpoint of the overall reliability of the twist-beam axle, which is a particularly critical characteristic in the automotive field and hence requires a careful, long, and burdensome procedure of verification and assembly.

In addition, the partial lack of sturdiness can certainly be effectively overcome via a general oversizing of the structure of the twist-beam axle, but this has adverse repercussions on the overall weight thereof. Sometimes said increase in weight can have a negative effect on vehicles that are already of themselves burdensome (for example, in the case of four-wheel-drive vehicles).

The solution described, as likewise the other known solutions of twist-beam axles, does not enable local increase of the torsional stiffness of the twist beam in the proximity of the mounts of the suspension without increasing (at times in an altogether useless way) the torsional stiffness of the suspension around the mid point of the twist beam itself.

The aim of the present invention is to provide a curved twist-beam axle that will be free from the drawbacks described above.

According to the present invention, a curved twist-beam axle is provided as described in Claim 1.

The invention will now be described with reference to the annexed plates of drawings, which illustrate a non-limiting example of embodiment thereof, and in which:
- Figure 1 illustrates a view front of a curved twist-beam axle according to the present invention;
- Figure 2 illustrates a three-dimensional view of the curved twist-beam axle of Figure 1;
- Figure 3 illustrates a cross section of part of the curved twist-beam axle according to the present invention in exploded view, in such a way as to highlight different areas thereof;
- Figures 4a-4d illustrate different sections of part of the curved twist-beam axle according to the present invention, respectively, in regions corresponding to the lines I-I, II-II, III-III, IV-IV represented in Figure 1.

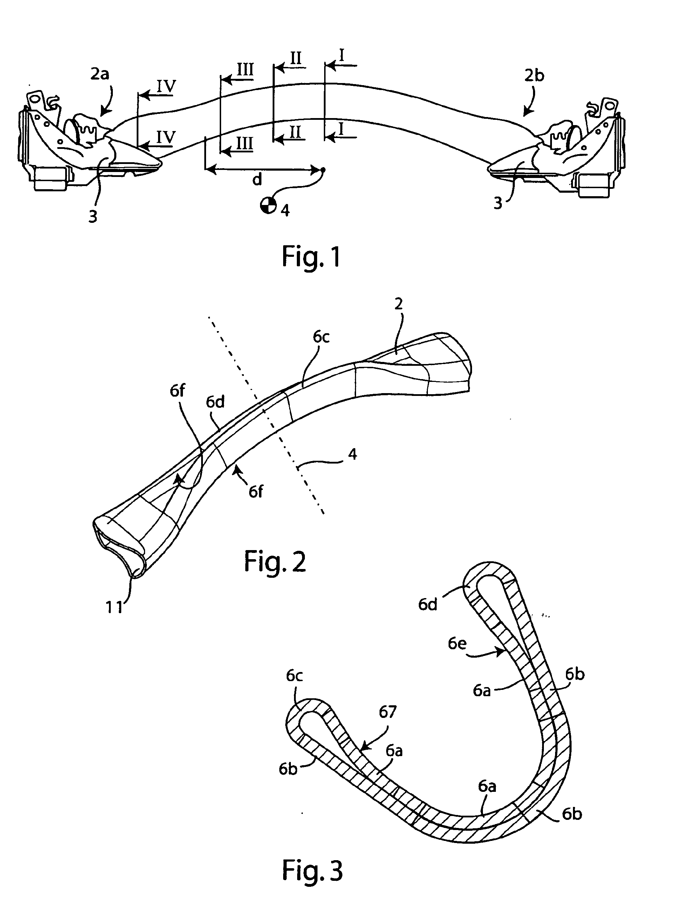

With reference to Figure 1, designated as a whole by 1 is a curved twist-beam axle.

The curved twist-beam axle 1 can be installed on board wheeled vehicles with front-wheel drive, rear-wheel drive, or four-wheel drive and comprises at least one beam 2, welded at its ends to respective structures 3 constituted by an arm and by a mount, which are designed to be connected each with a respective wheel, via a respective hub and with shock-absorbing means of the vehicle.

Each of the structures 3 is fixed to a first lateral end 2a and a second lateral end 2b of the beam 2 in such a way that, when correctly installed on the vehicle, it will be positioned so that it can be oriented with respect to the direction of advance of the vehicle itself, which is schematically indicated in Figures 1 and 2 by an axis 4.

For convenience of description, referred to hereinafter as "up" is the direction opposite to the plane in which the vehicle lies, with the twist-beam axle according to the present invention actually installed. A direction "upwards" regards - in the present description - a direction towards the top part of the vehicle housing the twist-beam axle 1 and substantially orthogonal to the axis 4.

The beam 2 moreover has a closed box-type structure, which is at least partially hollow and has a curved shape such that, once the twist-beam axle 1 is properly installed on the vehicle, the curvature of the beam 2 will present its concavity facing upwards, with a stationary point located in the middle thereof.

If viewed in cross section with respect to the axis 4, and in particular along the lines I-I, II-II, III-III and IV-IV, the beam 2 has a variable cross section as a distance d transverse with respect to the axis 4 varies. In detail, the beam 2 has a cross section that opens increasingly as the transverse distance d increases.

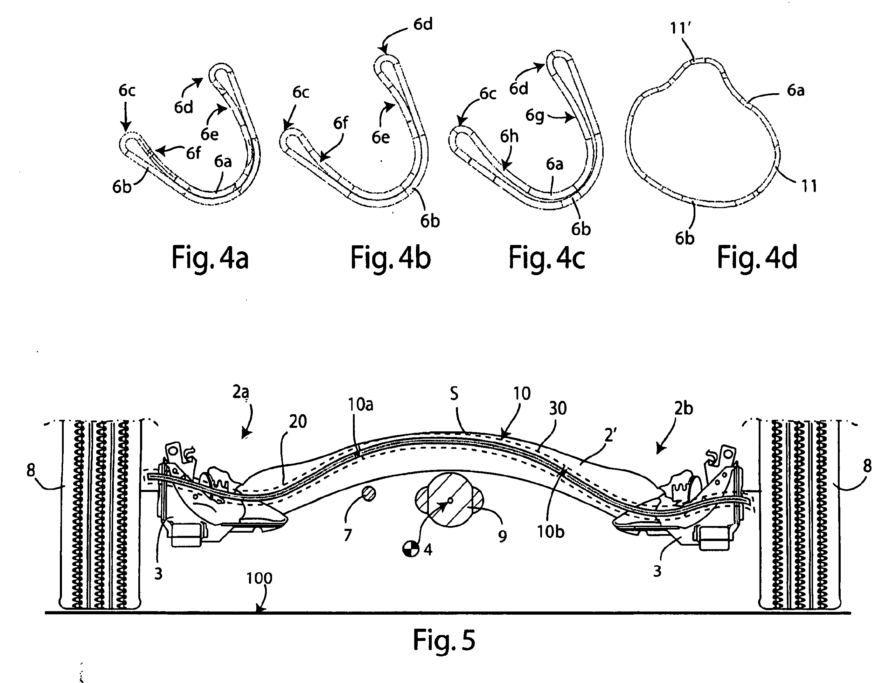

In a substantially central area, corresponding to the lines I-I (Figures 1 and 4a), the cross section of the beam 2 has the shape of a double U with its concavity facing upwards.

As is shown in Figure 3, the double U is formed by a continuous plate of a metal type having a substantially constant thickness and comprises a first, internal, part 6a and a second, external, part 6b, which is curved and radiused at the top with two portions 6c, 6d with a smaller radius of curvature as compared to that of the first part 6a and of the second part 6b.

In detail, top portions 6c, 6d of the double U are bent back on themselves, leaving the concave portion of the U facing substantially downwards, i.e., towards the ground, when the twist-beam axle is mounted on the vehicle. In a region corresponding to the line I-I, the concave portion of the U encloses an area having a first size.

Consequently, on the first, internal, part 6a, in a region substantially corresponding to the boundary between the first part 6a and portions 6c, 6d of the double U of the beam 2, at the line I-I (Figure 4a) two curvatures 6e, 6f are present, which have their centres inside the concave portion of the double U, such as to cause further protrusion of the internal part 6a of the double U towards the concave portion itself.

In a region corresponding to the top part of the concave portion of the double U, the first, internal, part 6a and the second, external, part 6b of the double U are substantially in mutual contact.

Moving in a transverse direction with respect to the axis 4, i.e., as the distance d increases, and observing the beam 2 sectioned along the line II-II (Figure 4b), the cross section always has a U shape, but in this case the concave portion encloses substantially an area having a second dimension greater than the first. In addition, the two curvatures 6e, 6f have a radius increased with respect to the one that they have in a region corresponding to the line I-I, in such a way that the double U of the beam 2 has a more open shape. The first, internal, part 6a and the second, external, part 6b of the double U continue to being substantially in mutual contact in a region corresponding to the apex of the concave portion of the U.

As illustrated in Figure 4c, moving along the first and second ends 2a, 2b of the beam 2, the cross section thereof changes, causing an increase in the area enclosed by the concave portion and a progressive spacing apart of the top portions of the U, which move away from one another in a direction substantially parallel to the direction of the axis 4. Simultaneously, the radii of the curvatures 6e, 6f increase tending to infinity and causing also the internal part 6a of the double U to present side parts 6g, 6h that radius with the portions 6c, 6d of a substantially rectilinear shape.

Moving further away from the axis 4, as shown in Figure 4d, the structure of the beam 4 progressively evolves into a substantially circular shape with a prominent portion 11' facing substantially upwards and extending outside of the circumference 11 substantially identified by the beam 2.

The first, internal, part 6a and the second, external, part 6b of the U are progressively spaced apart from one another in a region corresponding to the concave portion of the double U, which progressively disappears evolving into a substantially circular shape.

Substantially, hence, the twist-beam axle 1 according to the present invention has a continuous and progressive evolution of the shape of its beam 2 proceeding from the centre towards the two ends 2a, 2b.

Experimental analyses conduced on the curved twist-beam axle according to the present invention have shown that it does not require any additional anti-roll bars to achieve a sufficient strength.

The beam 2, with the shape described previously, has a variable torsional stiffness as a function of the cross section in which it is analysed, i.e., as a function of the distance d from the axis 4. In detail, the torsional stiffness of the beam 2 is at a first minimum value at the centre, hence basically around the part of beam 2 that overlies the axis 4, and is maximum at the ends 2a, 2b, where there are the welds with the aforesaid structures 3. This progressive increase in torsional stiffness towards the ends 2a, 2b is obtained without any aid of additional reinforcement beams.

An alternative embodiment of the present invention is illustrated in Figure 5.

In this case, the twist-beam axle 1 differs from the one illustrated in the first embodiment described up to now in that it has a beam 2' provided with a number of curvatures. The characteristics of progressive evolution of the shape of the beam, moving from a centre thereof towards one of the two ends 2a, 2b, remains the same also for this alternative embodiment of the beam 2'.

In the alternative embodiment, the beam 2' of the twist-beam axle 1 has three different continuous curvatures, of which two concordant ones and a discordant one, all of which lie in a common plane so as to represent a sort of S lying down.

In detail, the beam 2' has a first curvature 10 with convexity facing upwards in a substantially central area. Said curvature 10 is symmetrical with respect to the centre of the beam 2'.

The first curvature 10 is radiused, in a region corresponding to its ends 10a, 10b, constituting inflection points, with a second curvature 20 and a third curvature 30, having concavities facing upwards. The second and third curvatures 20, 30 extend from the ends 10a, 10b up to the ends 2a, 2b of the beam 2', which are also welded to the structures 3.

In detail, the ends 10a, 10b are approximately at three quarters of the half-length of the beam 2', measured in an orthogonal direction and starting from the axis 4 in the direction of the first end 2a or equivalently of the second end 2b of the beam 2'.

As is shown in Figure 5, the ensemble of the first, second, and third curvatures 10, 20, 30 of the beam 2' makes it possible to raise considerably the central part of the beam 2' from the ground 100 when this is installed on a vehicle in such a way as to guarantee ease of passage of possible pipes 7 (exhaust pipes, fuel pipe or other similar devices). In detail, Figure 6 shows the twist-beam axle 1 set on a vehicle provided with wheels 8, and highlights schematically the pipes 7 with circular shape and an example of a mechanical device, such as a differential.

As compared to a twist-beam axle with non-closet box-type structure, given the same perimeter of the cross section, the twist-beam axle 1 according to the present invention presents an increase in the structural stiffness without additional reinforcement cross members and a reduction in weight by several kilograms.

The advantages of the curved twist-beam axle are clear in the light of the foregoing description. In detail, the curved twist-beam axle 1 according to the present invention makes it possible to maintain in the first place a standard overall structure both as regards vehicles provided with drive on a single axle and as regards four-wheel-drive vehicles. In fact, the presence of a curvature upwards of the beam 2 enables effective housing also of mechanical members of non-negligible dimensions, such as, for example, a differential.

In addition, the twist-beam axle according to the present invention no longer requires structural reinforcements, with consequent intrinsic strength and reduction of the total cost of production of the suspension given by the smaller number of elements that make it up.

The absence of numerous elements designed to make up the twist-beam axle according to the present invention is in favour of the reliability of the twist-beam axle 1 described in the present invention.

Finally, with the structure of the beam 2 of the twist-beam axle 1 described so far it is possible to optimize the torsional strength and stiffness at the ends 2a, 2b of the beam 2 without necessarily causing an undesired strengthening thereof in the central area, hence optimizing the response of the beam itself to loads.

Some variants may be applied to the device described herein. More in particular, the structure 3 must not be considered limiting, either as regards its shape or as regards its size, in regard to the present invention. According to the type of hub and the engagement structure thereof and according to the destination of use (steering axle or fixed axle), the shape and dimensions may vary.

In addition, even though a beam 2 of a metal type has been described, there may equivalently be used materials with the corresponding properties of fireproofing, mechanical resistance, and insensitivity to humidity, temperature, and corrosion.

As an alternative to the traditional shock absorber constrained to the mount of the twist-beam axle 1, other linear-actuation systems can be used, including active ones, which can perform shock-absorbing and damping function.

Finally, the structure of the beam 2 can be coated with one or more films of metal material, plastic, or paint in order to increase insulation thereof from the external environmental agents.

## Claims

1. A curved twist-beam axle (1) of a vehicle, constituting a means of mobile constraint between the wheels of the vehicle and its frame; said curved twist-beam axle (1) comprising a beam(2) (2') and a pair of structures (3) to be connected each with a respective wheel of the vehicle via a respective hub, and with shock -absorbing suspension elements of the frame; said beam (2) (2') is constituted by a closed tubular element bent back so as to present a cross section having a substantially U-shaped configuration at least in a region corresponding to a central stretch of the beam (2)(2'), which evolves progressively moving away from said central stretch until it assumes a cross section of a substantially circular configuration at the end (2a, 2b) of the beam that are connects to said structures (3); the curvature of the beam (2) (2') lying in a plane substantially orthogonal to the ground and to the axis of advancing (4) of the vehicle; said U-shaped cross section comprises a first, internal, part (6a) and a second, external, part (6b), both of which are curved and are radiused at the top with two portions (6c,6d) having a smaller radius of curvature as compared to the curvature of said first part (6a) and of second part (6b); in a region corresponding to said central stretch, around the portions (6c, 6d) of the U-shaped cross section of the beam (2) (2'), two curvatures (6e,6f) are present, at least on said internal part (6a), having their centre inside the concave portion of the U and such as to cause further protrusion of the internal part (6a) of the U towards the concave portion itself;
**characterized in that** moving the curved twist-beam axle(1) away from said axis (4) in a direction perpendicular thereto and towards both first end (2a) and a second end (2b) of said beam (2) (2'), said two curvatures (6e,6f) open up so as to present a substantially infinite radius, and progressively, the cross section of the beam (2) (2') opens passing from said U shape to said substantially circular shape with a prominent portion (11') facing substantially upwards and extending outside of a circumference (11) substantially identified by the beam (2) (2').

2. The curved twist-beam axle according to claim 1, wherein, in a region corresponding to said central stretch, said U-shaped cross section has the concavity facing in a direction oriented upwards.

3. The curved twist-beam axle according to claim 2, wherein said beam (2) (2') is formed by a continuous plate of a metal type having substantially constant thickness.

4. The curved twist-beam axle according to claim 1, wherein said beam (2) has a single convexity facing upwards, with a stationary point located in the middle.

5. The curved twist-beam axle according to claim 1, wherein said beam (2'9 has three different curvatures (10,20,30), of which a first curvature (10) provided in the central stretch of the beam (2') and a second curvature (20) and a third curvature (30), which are lateral with respect to said first curvature (10); the second and the third curvatures (20,30) being concordant respect to one another; said first curvature (10) being instead discordant with respect to the other two; the first curvature (10) having a convexity facing upwards and having moreover two ends (10a) and (10b) radiusing respectively with said second and third curvature (20,30), having a concavity facing downwards, in such a way that the three curvatures (10,20,30) in their radiusing points, form respective inflections.

6. The curved twist-beam axle according to claim 5, wherein said ends (10a,10b) are approximately at three quarters of the half-length of the beam (2'), measured in an orthogonal direction and starting from said axis (4) in the direction of the first end (2a) or equivalently of the second end (2b).

## Patentansprüche

1. Gekrümmte Verbundlenkerachse (1) eines Fahrzeugs, welche ein Bewegungsbeschränkungsmittel zwischen den Rädern des Fahrzeugs und seinem Rahmen bildet, wobei die gekrümmte Verbundlenkerachse (1) einen Holm (2), (2') und ein Paar von Strukturen (3), die jede mit einem jeweiligen Rad des Fahrzeugs über eine jeweilige Nabe zu verbinden sind, aufweist und mit stoßabsorbierenden Federungselementen des Rahmens; wobei der Holm (2), (2') durch ein geschlossenes röhrenartiges Element gebildet ist, das derart zurückgebogen ist, dass es einen Querschnitt mit einer im Wesentlichen U-förmigen Konfiguration zumindest in einer Region aufweist, die einer zentralen Erstreckung des Holms (2), (2') entspricht, welche sich zunehmend wegbewegend von der zentralen Erstreckung entwickelt, bis sie einen Querschnitt von im Wesentlichen kreisförmiger Konfiguration an dem Ende (2a, 2b) des Holms, welches mit den Strukturen (3) verbunden ist, annimmt; wobei die Krümmung des Holms (2),( 2') in einer Ebene im Wesentlichen orthogonal zu dem Untergrund und zu der Bewegungsachse (4) des Autos liegt; wobei der U-förmige Querschnitt einen ersten, internen Teil (6a) und eine zweiten, externen Teil (6b) aufweist, welche beide gekrümmt sind und oben mit zwei Bereichen (6c, 6d) mit einem Radius versehen sind, der verglichen mit der Krümmung des ersten Teils (6a) und des zweiten Teils (6b) einen kleineren Krümmungsradius hat; wobei in einer Region, die der zentralen Erstreckung entspricht, um die Bereiche (6c, 6d) des U-förmigen Querschnitts des Holms (2), (2') zwei Krümmungen (6e, 6f) vorhanden sind, zumindest an dem internen Teil (6a), welche ihr Zentrum innerhalb des konkaven Bereichs des U haben und derart, um einen weiteren Überstand des internen Teils (6a) des U's hin zu dem konkaven Bereich selbst zu bewirken;
**dadurch gekennzeichnet, dass**, sich die gekrümmte Verbundlenkerachse (1) entlang weg von der Achse (4) einer Richtung senkrecht dazu und hin zu sowohl dem ersten Ende (2a) als auch dem zweiten Ende (2b) des Holms (2), (2') bewegend, die zwei Krümmungen (6e, 6f) sich derart öffnen, dass sie einen im Wesentlichen unendlichen Radius bilden, und der Querschnitt des Holms (2), (2') sich zunehmend öffnet übergehend von der U-Form zu der im Wesentlichen kreisförmigen Form mit einem vorstehenden Bereich (11'), der im Wesentlichen aufwärts gerichtet ist und sich außerhalb eines Umfangs (11), der im Wesentlichen von dem Holm (2), (2') festgelegt wird, erstreckt.

2. Gekrümmte Verbundlenkerachse nach Anspruch 1, wobei, in einer Region, die der zentralen Erstreckung entspricht, der U-förmige Querschnitt die Konkavität hat, die in eine aufwärts orientierte Richtung zeigt.

3. Gekrümmte Verbundlenkerachse nach Anspruch 2, wobei der Holm (2), (2') durch eine durchgehende metallartige Platte mit im Wesentlichen konstanter Dicke gebildet ist.

4. Gekrümmte Verbundlenkerachse nach Anspruch 1, wobei der Holm (2) eine einzelne aufwärts gerichtete Konvexität hat mit einem in der Mitte angeordneten stationären Punkt.

5. Gekrümmte Verbundlenkerachse nach Anspruch 1, wobei der Holm (2') drei verschiedene Krümmungen (10, 20, 30) hat, wobei eine erste Krümmung (10) in der zentralen Erstreckung des Holms (2') und eine zweite Krümmung (20) und eine dritte Krümmung (30), die im Bezug zu der ersten Krümmung (10) seitlich angeordnet sind, vorgesehen sind; wobei die zweite und die dritte Krümmung (20, 30) konkordant im Bezug zueinander sind; wobei die erste Krümmung (10) stattdessen diskordant im Bezug auf die anderen zwei ist; wobei die erste Krümmung (10) eine aufwärts gerichtete Konvexität hat und ferner zwei Enden (10a) und (10b) hat, die sich bezüglich der ersten und der zweiten Krümmung (20, 30), die eine abwärts gerichtete Konkavität haben, derart krümmen, dass die drei Krümmungen (10, 20, 30) in ihren Krümmungsradiuspunkten jeweilige Wendepunkte bilden.

6. Gekrümmte Verbundlenkerachse nach Anspruch 5, wobei die Enden (10a, 10b) ungefähr bei drei Vierteln der halben Länge des Holms (2') sind, gemessen in einer orthogonalen Richtung und ausgehend von der Achse (4) in der Richtung des ersten Endes (2a) oder äquivalent des zweiten Endes (2b).

## Revendications

1. Essieu à barre de torsion incurvée (1) d'un véhicule constituant un moyen de contrainte mobile entre les roues du véhicule et sa carrosserie ; ledit essieu à barre de torsion incurvée (1) comprenant une barre (2) (2') et une paire de structures (3) destinée, chacune, à être respectivement raccordées à une roue du véhicule via un moyeu respectif, et aux éléments de suspension amortisseurs de la carrosserie ; ladite barre (2) (2') est constituée d'un élément tubulaire fermé incurvé vers l'arrière de manière à présenter une section transversale ayant une configuration sensiblement en forme de U au moins dans une région correspondant à un allongement central de la barre (2) (2'), qui évolue progressivement en s'éloignant dudit allongement central jusqu'à ce qu'il prenne une section transversale d'une configuration sensiblement circulaire à l'extrémité (2a, 2b) de la barre qui sont les raccords aux dites structures (3) ; la courbure de la barre (2) (2') se trouvant dans un plan sensiblement orthogonal au sol et à l'axe de déplacement (4) du véhicule ; ladite section transversale en forme de U comprend une première partie (6a) interne et une seconde partie (6b) externe, toutes les deux étant incurvées et présentant un congé de raccordement, dans leur partie supérieure, avec deux portions (6c, 6d) ayant un rayon de courbure plus petit par rapport à la courbure de ladite première partie (6a) et de la seconde partie (6b) ; dans une région correspondant au dit allongement central, autour des portions (6c, 6d) de la section transversale en forme de U de la barre (2) (2'), deux courbures (6e, 6f) sont présentes, au moins sur ladite partie interne (6a), ayant leur centre à l'intérieur de la portion concave du U et de manière à provoquer une autre saillie de la partie interne (6a) du U vers la portion concave elle-même ;
**caractérisé en ce qu'**en s'éloignant de l'essieu à barre de torsion incurvée (1) dudit axe (4) dans une direction perpendiculaire à celui-ci, et vers, à la fois, la première extrémité (2a) et la seconde extrémité (2b) de ladite barre (2) (2'), lesdites deux courbures (6e, 6f) s'ouvrent de manière à présenter un rayon sensiblement infini, et progressivement la section transversale de la barre (2) (2') s'ouvre en passant de ladite forme de U à ladite forme sensiblement circulaire avec une portion proéminente (11') tournée sensiblement vers le haut et s'étendant vers l'extérieur d'une circonférence (11) sensiblement identifiée par la barre (2) (2').

2. Essieu à barre de torsion incurvée (1) selon la revendication 1, dans lequel, dans une région correspondant au dit allongement central, ladite section transversale en forme de U présente une concavité tournée dans une direction orientée vers le haut.

3. Essieu à barre de torsion incurvée (1) selon la revendication 2, dans lequel ladite barre (2) (2') est formée d'une plaque continue d'un type de métal ayant une épaisseur sensiblement constante.

4. Essieu à barre de torsion incurvée (1) selon la revendication 1, dans lequel ladite barre (2) présente une convexité unique tournée vers le haut, avec un point fixe situé au milieu.

5. Essieu à barre de torsion incurvée (1) selon la revendication 1, dans lequel ladite barre (2') présente trois courbures différentes (10, 20, 30), dont une première courbure (10) fournie dans l'allongement central de la barre (2') et une deuxième courbure (20) et une troisième courbure (30), qui sont latérales par rapport à ladite première courbure (10) ; la deuxième et la troisième courbures (20, 30) correspondant l'une à l'autre ; ladite première courbure (10), au contraire, ne correspondant pas aux deux autres ; la première courbure (10) présentant une convexité tournée vers le haut et ayant, de plus deux extrémités (10a) et (10b) présentant un congé de raccordement respectivement avec lesdites deuxième et troisième courbures (20, 30), présentant une concavité tournée vers le bas, de manière que les trois courbures (10, 20, 30), dans leurs points de congé de raccordement, forment des inflexions respectives.

6. Essieu à barre de torsion incurvée (1) selon la revendication 5, dans lequel lesdites extrémités (10a, 10b) se situent environ aux trois quarts de la demi-longueur de la barre (2'), mesurée dans une direction orthogonale et commençant à partir dudit axe (4) dans la direction de la première extrémité (2a) ou de manière équivalente pour la seconde extrémité (2b).
